(19) Europäisches Patentamt
European Patent Office
Office européen des brevets

(11) **EP 3 426 622 B1**

(12) **EUROPÄISCHE PATENTSCHRIFT**

(45) Veröffentlichungstag und Bekanntmachung des Hinweises auf die Patenterteilung:
**21.10.2020 Patentblatt 2020/43**

(21) Anmeldenummer: **16708662.8**

(22) Anmeldetag: **08.03.2016**

(51) Int Cl.:
**C04B 35/101** (2006.01)   **C04B 35/107** (2006.01)
**C04B 35/185** (2006.01)

(86) Internationale Anmeldenummer:
**PCT/EP2016/054878**

(87) Internationale Veröffentlichungsnummer:
**WO 2017/152952 (14.09.2017 Gazette 2017/37)**

(54) **FEUERFESTES KERAMISCHES ERZEUGNIS**

REFRACTORY CERAMIC PRODUCT

PRODUIT CÉRAMIQUE RÉFRACTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.01.2019 Patentblatt 2019/03**

(73) Patentinhaber: **Refractory Intellectual Property GmbH & Co. KG**
**1100 Wien (AT)**

(72) Erfinder:
• **DJURICIC, Boro**
 **8700 Leoben (AT)**
• **FREIBERGER, Norbert**
 **8054 Graz (AT)**
• **BAUER, Christoph**
 **8047 Graz (AT)**
• **MÜHLHÄUSSER, Jürgen**
 **8700 Leoben (AT)**

(74) Vertreter: **Berkenbrink, Kai-Oliver**
**Patentanwälte Becker & Müller**
**Turmstrasse 22**
**40878 Ratingen (DE)**

(56) Entgegenhaltungen:
**EP-A1- 3 029 005    JP-A- 2004 292 176**
**JP-A- 2014 055 074**

• **J. J. NICKL ET AL: "Gasphasenabscheidung im System Ti-Si-C", J. LESS-COMMON METALS, Bd. 26, 1. Januar 1972 (1972-01-01), Seiten 335-353, XP9189588, The Netherlands**
• **CLARK D W ET AL: "High temperature ion irradiation effects in MAX phase ceramics", ACTA MATERIALIA, ELSEVIER, OXFORD, GB, Bd. 105, 24. Dezember 2015 (2015-12-24), Seiten 130-146, XP029395722, ISSN: 1359-6454, DOI: 10.1016/J.ACTAMAT.2015.11.055**
• **RAMPAI TOKOLOHO ET AL: "Investigation of MAX phase/c-BN composites", CERAMICS INTERNATIONAL, ELSEVIER, AMSTERDAM, NL, Bd. 39, Nr. 5, 11. Januar 2013 (2013-01-11), Seiten 4739-4748, XP028526807, ISSN: 0272-8842, DOI: 10.1016/J.CERAMINT.2012.10.279**

**Beschreibung**

Die Erfindung betrifft ein feuerfestes keramisches Erzeugnis.

Der Begriff "feuerfestes keramisches Erzeugnis" im Sinne der Erfindung bezeichnet insbesondere feuerfeste Erzeugnisse mit einer Einsatztemperatur von über 600°C und bevorzugt feuerfeste Werkstoffe gemäß DIN 51060: 2000-6, also Werkstoffe mit einem Kegelfallpunkt größer SK 17. Die Ermittlung des Kegelfallpunktes kann insbesondere gemäß DIN EN 993-12:1997-06 erfolgen.

Feuerfeste Erzeugnisse sind bei ihrer Anwendung häufig aggressiven Flüssigkeiten und Gasen bei hohen Temperaturen ausgesetzt, beispielsweise Schlacken sowie Glas- oder Metallschmelzen. Diese können das feuerfeste Erzeugnis durch Risse und Poren infiltrieren, was zu einer Korrosion des Erzeugnisses führen kann. Zur Verbesserung der Korrosionsbeständigkeit feuerfester keramischer Erzeugnisse ist es daher häufig gewünscht, möglichst rissfreie Erzeugnisse mit möglichst wenigen und kleinen Poren zur Verfügung zu stellen. Solch hochdichte und weitgehend rissfreie feuerfeste Erzeugnisse weisen aufgrund der Sprödigkeit feuerfester keramischer Erzeugnisse jedoch häufig nur eine verhältnismäßig geringe Thermoschockbeständigkeit auf.

Aus dem Stand der Technik sind daher Technologien bekannt, die Sprödigkeit eines feuerfesten Erzeugnisses zu verringern beziehungsweise seine Thermoschockbeständigkeit und Gefügeelastizität zu verbessern.

So ist es beispielsweise bekannt, die Sprödigkeit feuerfester Erzeugnisse auf Basis Korund ($Al_2O_3$), Magnesia (MgO) und/oder Magnesiaspinell (MgO · $Al_2O_3$) durch sogenannte Elastifizierer, die in die Matrix des Erzeugnisses eingebunden werden, zu verringern und die Thermoschockbeständigkeit des Erzeugnisses hierdurch zu verbessern. Die Wirkungsweise dieser Elastifizierer beruht darauf, dass diese einen anderen Wärmeausdehnungskoeffizienten als die Hauptkomponente des feuerfesten Erzeugnisses aufweisen, so dass es bei der Temperaturbehandlung des Erzeugnisses und seiner anschließenden Abkühlung zu Spannungen zwischen dem Elastifizierer und der Hauptkomponente kommt. Hierdurch bilden sich Mikrorisse im Erzeugnis, die im Fall eines mechanischen Angriffs auf das Erzeugnis einen Teil der Bruchenergie kompensieren, wodurch die Gefahr eines Sprödigkeitsbruches des Erzeugnisses verringert werden kann. Nachteilig an der Verwendung solcher Elastifizierer ist jedoch, dass die Korrosionsbeständigkeit der Erzeugnisse aufgrund der erzeugten Mikrorisse sinken kann.

Ferner ist es bekannt, die Gefügeflexibilität feuerfester Erzeugnisse auf Basis Magnesia oder Korund durch Kohlenstoff zu verbessern. Problematisch bei solchen MgO-C-Steinen oder $Al_2O_3$-C-Steinen ist jedoch die geringe thermische Stabilität des Kohlenstoffs bei hohen Temperaturen, insbesondere in oxidierender Atmosphäre.

Der Erfindung liegt die Aufgabe zu Grunde, ein feuerfestes keramisches Erzeugnis mit einer hohen Korrosionsbeständigkeit zur Verfügung zu stellen. Insbesondere soll die Korrosionsbeständigkeit des durch die Erfindung zur Verfügung zu stellenden Erzeugnisses höher sein als die Korrosionsbeständigkeit der aus dem Stand der Technik bekannten feuerfesten keramischen Erzeugnisse, die zur Verbesserung ihrer Thermoschockbeständigkeit, Gefügeelastizität und Bruchzähigkeit einen wie vorstehend angeführten Elastifizierer aufweisen.

Zur Lösung der Aufgabe wird erfindungsgemäß zur Verfügung gestellt ein feuerfestes keramisches Erzeugnis mit folgenden Merkmalen:

- Das Erzeugnis umfasst Kristallite in Form einer MAX-Phase;
- die Kristallite in Form der MAX-Phase umfassen Kristallite mit einem Durchmesser von wenigstens 10 $\mu$m.

Die Erfindung beruht auf der überraschenden Grunderkenntnis, dass sich die Korrosionsbeständigkeit feuerfester keramischer Erzeugnisse verbessern lässt, soweit diese Erzeugnisse Kristallite in Form einer MAX-Phase umfassen und diese Kristallite in Form der MAX-Phase Kristallite mit einem Durchmesser von wenigstens 10 $\mu$m umfassen.

Insbesondere wurde erfindungsgemäß festgestellt, dass sich die Korrosionsbeständigkeit feuerfester keramischer Erzeugnisse, die solche Kristallite in Form einer MAX-Phase mit einem Durchmesser von wenigstens 10 $\mu$m aufweisen, gegenüber metallurgischen Schlacken und Metallschmelzen verbessern lässt.

Insoweit wurde erfindungsgemäß insbesondere überraschend festgestellt, dass die Korrosionsbeständigkeit von feuerfesten keramischen Erzeugnissen, insbesondere gegenüber solchen metallurgischen Schlacken und Metallschmelzen, sprunghaft dann ansteigt, wenn diese Erzeugnisse Kristallite in Form einer MAX-Phase mit einem Durchmesser von wenigstens 10 $\mu$m aufweisen. Die Erfinder vermuten, dass die Korrosionsbeständigkeit von Kristalliten in Form von MAX-Phasen insbesondere gegenüber Schlacken und Metallschmelzen ab einem Durchmesser von wenigstens 10 $\mu$m sprunghaft ansteigt und sich diese Korrosionsbeständigkeit solcher Kristallite auf das feuerfeste keramische Erzeugnis, welches solche Kristallite umfasst, überträgt.

Mit MAX-Phasen wird bekanntermaßen eine Materialklasse schichtförmiger Carbide und Nitride bezeichnet, die eine geschichtete Struktur ähnlich wie Graphit aufweisen und die der allgemeinen Formel $M_{n+1}AX_n$ entsprechen, mit:

     n = 1, 2 oder 3;
     M = einem frühen Übergangsmetall, insbesondere in Form von Sc, Ti, V, Cr, Zr, Nb, Mo, Hf oder Ta;

A = einem Element der A-Gruppe (insbesondere III A und IV A oder der Gruppen 13 und 14), insbesondere in Form von Al, Si, P, S, Ga, Ge, As, In, Sn, Ti oder Pb; und

X = C und/oder N.

Diese Materialklasse der MAX-Phasen wurde erstmalig in den 1990er Jahren synthetisiert und deren Eigenschaften beschrieben. Danach vereinen MAX-Phasen vorteilhafte Eigenschaften keramischer und metallischer Werkstoffe, beispielsweise eine hohe Elastizität, eine gute thermische und elektrische Leitfähigkeit, eine hohe chemische Korrosionsbeständigkeit, einen niedrigen thermischen Ausdehnungskoeffizienten sowie eine hohe Thermoschockbeständigkeit und Schadenstoleranz. Die Vickers-Härte polykristalliner MAX-Phasen liegt in der Regel im Bereich von 2 bis 8 GPa; insoweit sind MAX-Phasen weicher als die meisten geformten Keramiken, aber härter als die meisten Metalle [April 2013, American Ceramic Society Bulletin, Vol. 92, No. 3, Miladin Radovic and Michel W. Barsoum]. Zudem sind die meisten MAX-Phasen hoch oxidationsbeständig. Ferner erfahren MAX-Phasen bei hohen Temperaturen eine Umwandlung von einem spröderen zu einem plastischeren Verhalten hin ("brittle-to-plastic transition", BPT), wobei sie insbesondere auch ein plastisches Biegeverhalten aufweisen. Ein besonderes Unterscheidungsmerkmal von MAX-Phasen liegt insbesondere auch darin, dass diese in höchstem Grade schadenstolerant und thermoschockbeständig sind und meist ohne weiteres maschinell bearbeitbar sind. Die Bruchzähigkeit von MAX-Phasen bei Raumtemperatur

($K_{Ic}$) liegt in der Regel im Bereich von 5 bis 20 MPa $\sqrt{m}$ und damit verhältnismäßig hoch im Vergleich zur Bruchzähigkeit anderer Keramiken. Die hohen Werte der Bruchzähigkeit ($K_{Ic}$) und das R-Kurven-Verhalten finden ihre Ursache in der Bildung von plastisch, deformierbaren Brückenligamenten und risshemmenden Eigenschaften von Knickgrenzen. Eine weitere wichtige Eigenschaft von MAX-Phasen ist deren außergewöhnliche Thermoschockbeständigkeit. Anders als typische Keramiken, zerbrechen MAX-Phasen nicht einfach unter Last, sondern in einigen Fällen nimmt deren Restbiegefestigkeit auch nach einer Belastung bei Temperaturen von beispielsweise 1.200°C und einem anschließenden Abschrecken in Wasser mit Raumtemperatur sogar zu.

Aus dem Stand der Technik ist es bereits bekannt, MAX-Phasen zur Beeinflussung der Eigenschaften von Komposit-Werkstoffen zu verwenden. So ist beispielsweise die Verwendung einer MAX-Phase in Form von $Ti_3SiC_2$ in Komposit-Werkstoffen auf Basis von $Al_2O_3$-TiC-$Ti_3SiC_2$ bekannt (L. F. Liu et. al: "Microstructure and properties of Al2O3-TiC-Ti3SiC composites fabricated by spark plasma sintering", Applied Ceramics, 2010, Bd. 109, Nr. 7, 394-398).

Ferner ist bereits die Verwendung einer MAX-Phase in Form $Ti_3SiC_2$ in Komposit-Werkstoffen vom Typ $Al_2O_3$-$Ti_3SiC_2$ beschrieben (Y. M. Luo et al.: "Fabrication of Al2O3-Ti3SiC2 and mechanical properties invaluation", Materials Letters, 2003, Bd. 57, 2509-2514; L. Yong Ming et al.: "Preparation and characterization of Al2O3-Ti3SiC2 composites and its functionally graded materials", Material Research Bulletin, 2003, Bd. 38, Nr. 1, 696-78; Y.-L. Chin et al.: "Contribution of plastic deformation of Ti3SiC2 to the crack deflection in the Al2O3/Ti3SiC2 composites", Materials, Science & Engineering A 528, 2011, Bd. 128, Nr. 7, 3270-3274).

Zur Herstellung solcher Komposit-Werkstoffe wird im Stand der Technik regelmäßig vorgeschlagen, einen Rohstoff in Form einer MAX-Phase mit weiteren Rohstoffen, insbesondere auf Basis $Al_2O_3$, zu mischen, anschließend gemeinsam zu vermahlen und schließlich zu einem Komposit-Werkstoff zu sintern.

Zwar wurde im Stand der Technik insoweit ein Augenmerk auf die Korngröße der MAX-Phase in Form von $Ti_3SiC_2$ vor deren Vermahlung gelegt, die insoweit auch im Bereich von etwa 1 bis 40 $\mu$m lag. Kein Augenmerk gelegt wurde bisher jedoch auf die Größe der Kristallite der MAX-Phase im Komposit-Werkstoff nach dem Sinterbrand. Wie zuvor ausgeführt, hat sich nunmehr jedoch überraschend herausgestellt, dass insbesondere diese Größe der Kristallite der MAX-Phase in einem feuerfesten keramischen Erzeugnis einen wesentlichen Einfluss auf die Korrosionsbeständigkeit des feuerfesten Erzeugnisses ausübt.

Erfindungsgemäß umfassen die Kristallite in Form der MAX-Phase, die das erfindungsgemäße feuerfeste keramische Erzeugnis umfasst, Kristallite mit einem Durchmesser von wenigstens 10 $\mu$m, also beispielsweise auch mit einem Durchmesser von wenigstens 20 $\mu$m, 30 $\mu$m, 40 $\mu$m, 50 $\mu$m, 60 $\mu$m, 70 $\mu$m, 80 $\mu$m, 90 $\mu$m, 100 $\mu$m, 110$\mu$m, 120 $\mu$m, 130 $\mu$m, 140 $\mu$m, 150 $\mu$m, 160 $\mu$m, 170 $\mu$m, 180 $\mu$m, 190 $\mu$m, 200 $\mu$m, 210 $\mu$m, 220 $\mu$m, 230 $\mu$m, 240 $\mu$m, 250 $\mu$m, 260 $\mu$m, 270 $\mu$m, 280 $\mu$m, 290 $\mu$m oder 300 $\mu$m. Die vorbezeichneten Durchmesser, die Kristallite in Form einer MAX-Phase des erfindungsgemäßen Erzeugnisses wenigstens aufweisen können, werden hierin auch als "Mindestdurchmesser" bezeichnet. Besonders bevorzugt umfasst das erfindungsgemäße feuerfeste keramische Erzeugnis Kristallite in Form einer MAX-Phase mit einem Durchmesser von wenigstens 100 $\mu$m und ganz besonders auch mit einem Durchmesser von wenigstens 200 $\mu$m.

Erfindungsgemäß wurde festgestellt, dass die Korrosionsbeständigkeit eines feuerfesten keramischen Erzeugnisses mit zunehmendem Mindestdurchmesser der Kristallite, wie zuvor ausgeführt, gesteigert werden kann.

Unter einem "Kristallit" wird hierin ein kohärenter, einkristalliner Bereich in einem polykristallinen Gefüge verstanden. Benachbarte Kristallite sind dabei durch Korngrenzen getrennt und unterscheiden sich durch die jeweilige Orientierung ihrer Kristallstruktur.

Das erfindungsgemäße feuerfeste keramische Erzeugnis umfasst Kristallite in Form einer MAX-Phase, wobei diese MAX-Phase im Erzeugnis in einer Form oder in unterschiedlichen Formen vorliegen kann.

Die MAX-Phase im erfindungsgemäßen Erzeugnis kann insbesondere in Form wenigstens einer der folgenden Formen vorliegen: $Ti_3SiC_2$ oder wenigstens einer MAX-Phase, für die gilt:

M = Cr, Zr, Nb, Ti oder V,
A = Al, Si oder Sn,
X = C oder N.

Besonders bevorzugt liegen im erfindungsgemäßen feuerfesten keramischen Erzeugnis jedoch Kristallite in Form eine MAX-Phase in Form von $Ti_3SiC_2$ vor.

Erfindungsgemäß weisen die Kristallite in Form einer MAX-Phase die erfindungsgemäßen Mindestdurchmesser dann auf, wenn die Kristallite einen entsprechenden Mindestdurchmesser an irgendeiner Stelle aufweisen. Mit anderen Worten: Betrachtet man eine beliebige Querschnittsfläche eines Kristallites in Form einer MAX-Phase sowie eine gerade Linie, die (a) in dieser Querschnittsfläche liegt, die (b) von einem beliebigen Punkt an der Randlinie (entsprechend der Kristallgrenze beziehungsweise Korngrenze des Kristallites) der Querschnittsfläche startet und an einem beliebigen aber anderen Punkt der Randlinie der gleichen Querschnittsfläche endet, die (c) über ihre gesamte Länge in der gleichen Querschnittsfläche liegt und die (d) wenigstens eine Länge von "n" aufweist, dann weist der betreffende Kristallit in Form der MAX-Phase einen Mindestdurchmesser von "n" auf. Gemäß dem allgemeinsten Erfindungsgedanken weist ein Kristallit in Form einer MAX-Phase demnach beispielsweise dann einen Durchmesser von wenigstens 10 μm auf, wenn der entsprechende Kristallit an irgendeiner Stelle eine Querschnittsfläche mit einem Durchmesser von wenigstens 10 μm aufweist. Zur Feststellung der Durchmesser beziehungsweise Mindestdurchmesser von Kristalliten der MAX-Phasen eines feuerfesten keramischen Erzeugnisses kann eine Schliffprobe, insbesondere in Form eines Dünnschliffes oder Anschliffes eines feuerfesten keramischen Erzeugnisses hergestellt und die Schliffprobe anschließend mikroskopisch untersucht werden. Die Schliffproben zeigen bei der mikroskopischen Untersuchung Querschnittsflächen der Kristallite der MAX-Phasen in der Schnittebene. Dabei umfasst das feuerfeste keramische Erzeugnis einen Kristalliten in Form einer MAX-Phase mit einem erfindungsgemäßen Mindestdurchmesser, also gemäß dem allgemeinsten Erfindungsgedanken mit einem Durchmesser von wenigstens 10 μm, soweit die Querschnittsfläche wenigstens eines der Kristallite an irgendeiner Stelle den betreffenden Mindestdurchmesser aufweist.

Neben MAX-Phase kann das erfindungsgemäße feuerfeste keramische Erzeugnis wenigstens ein feuerfestes Grundmaterial aufweisen. Bei diesem feuerfesten Grundmaterial kann es sich um eines oder mehrere Materialien handeln, auf denen feuerfeste keramische Erzeugnisse regelmäßig basieren. Insoweit kann das erfindungsgemäße feuerfeste keramische Erzeugnis auf Basis wenigstens eines solchen feuerfesten Grundmaterials vorliegen.

Bei dem feuerfesten Grundmaterial kann es sich beispielsweise um wenigstens ein oxidisches feuerfestes Grundmaterial handeln. Alternativ kann es sich bei dem feuerfesten Grundmaterial beispielsweise um wenigstens ein nicht-oxidisches feuerfestes Grundmaterial handeln. Ferner kann es sich bei dem feuerfesten Grundmaterial um eine Mischung wenigstens eines oxidischen und wenigstens eines nicht-oxidischen feuerfestes Grundmaterial handeln.

Bei einem nicht-oxidischen feuerfesten Grundmaterial kann es sich beispielsweise um eines oder mehrere der folgenden nicht-oxidischen feuerfesten Grundmaterialien handelt: ein Nitrid, ein Carbid, ein Oxicarbid oder ein Carbonitrid. Bei einem nicht-oxidischen feuerfesten Grundmaterial in Form von Carbid kann es sich beispielsweise um eines oder mehrere der folgenden Carbide handeln: Siliciumcarbid (SiC), Borcarbid ($B_4C$), Titancarbid oder Wolframcarbid (WC). Titancarbid kann insbesondere in Form wenigstens eines der beiden Titancarbide TiC oder $Ti_3C_2$ vorliegen, aber beispielsweise auch in Form eines weiteren Titancarbides aus der Familie der Titancarbide. Bei einem nicht-oxidischen feuerfesten Grundmaterial in Form von Nitriden kann es sich beispielsweise um eines oder mehrere der folgenden Nitride handeln: Aluminiumnitrid (AlN), Bornitrid (BN), Galliumnitrid (GaN), Indiumnitrid (InN), Siliciumnitrid ($SiN_4$) oder Titannitrid (TiN). Bei einem nicht-oxidischen feuerfesten Grundmaterial in Form von Oxicarbid kann es beispielsweise um Aluminiumoxicarbid ($Al_4O_4C$) handeln. Bei einem nicht-oxidischen feuerfesten Grundmaterial in Form von Carbonitrid kann es beispielsweise um Aluminiumoxicarbonitrid ($Al_{28}C_6N_6O_{21}$) handeln. Bevorzugt weist das erfindungsgemäße feuerfeste keramische Erzeugnis nicht-oxidisches feuerfestes Grundmaterial in Form wenigstens eines der Carbide Titancarbid oder Siliciumcarbid auf.

Erfindungsgemäß kann vorgesehen sein, dass die Kristallite in Form einer MAX-Phase wenigstens einen, insbesondere aber auch jeweils mehrere Einschlüsse in Form vom Titancarbid ausweisen können. Titancarbid kann dabei, wie vorstehend ausgeführt, insbesondere in Form wenigstens eines der beiden Titancarbide TiC oder $Ti_3C_2$ vorliegen, aber beispielsweise auch in Form eines weiteren Titancarbides aus der Familie der Titancarbide. Erfindungsgemäß hat sich überraschend herausgestellt, dass die Korrosionsbeständigkeit des feuerfesten keramischen Materials hierdurch verbessert werden kann. Ferner wurde festgestellt, dass die Bruchfestigkeit des feuerfesten keramischen Materials hierdurch verbessert werden kann.

Bevorzugt handelt es sich bei dem feuerfesten Grundmaterial um ein oxidisches feuerfestes Grundmaterial. Bei einem oxidischen feuerfesten Grundmaterial kann es sich beispielsweise um eines oder mehrere der folgenden Oxide handeln: Aluminiumoxid ($Al_2O_3$), Siliciumoxid ($SiO_2$), Magnesiumoxid ($MgO$), Calciumoxid ($CaO$), Chromoxid ($Cr_2O_3$) oder Zirkoniumoxid ($ZrO_2$). Nach einer besonders bevorzugten Ausführungsform weist das erfindungsgemäße feuerfeste keramische Erzeugnis oxidisches feuerfestes Grundmaterial in Form von $Al_2O_3$ auf.

Das erfindungsgemäße feuerfeste keramische Erzeugnis kann feuerfestes Grundmaterial beispielsweise in einem Anteil von wenigstens 50 Masse-% aufweisen, also beispielsweise auch in einem Anteil von wenigstens 55, 60, 65, 70, 75, 80, 85, 90, 91, 92, 93, 94, 95, 96, 97, 98 oder 99 Masse-%.

Soweit das erfindungsgemäße feuerfeste keramische Erzeugnis ein feuerfestes Grundmaterial in Form von $Al_2O_3$ aufweist, kann das erfindungsgemäße feuerfeste keramische Erzeugnis einen Anteil an $Al_2O_3$ von wenigstens 50 Masse-% aufweisen, also beispielsweise auch einen Anteil von wenigstens 55, 60, 65, 70, 75, 80, 85, 90, 91, 92, 93, 94, 95, 96, 97, 98 oder 99 Masse-%.

Soweit das erfindungsgemäße feuerfeste keramische Erzeugnis ein feuerfestes Grundmaterial in Form wenigstens eines der Carbide Titancarbid oder Siliciumcarbid aufweist, kann das erfindungsgemäße feuerfeste keramische Erzeugnis einen Anteil an wenigstens einem der Carbide Titancarbid oder Siliciumcarbid im Bereich von 0,1 Masse-% bis 5 Masse-% aufweisen, also beispielsweise auch einen Anteil von wenigstens 0,1 oder 0,5 oder 1,5 oder 1,8 und beispielsweise auch in einem Anteil von höchstens 5,0 oder 4,5 oder 4,0 oder 3,5 oder 3,0 oder 2,5 oder 2,2 Masse-%.

Das erfindungsgemäße feuerfeste keramische Erzeugnis kann feuerfestes Grundmaterial beispielsweise in einem Anteil von höchstens 99,5 Masse-% aufweisen, also beispielsweise auch in einem Anteil von höchstens 99, 98, 96, 95, 92, 90, 88, 85, 80, 75 oder 60 Masse-%.

Soweit das erfindungsgemäße feuerfeste keramische Erzeugnis ein feuerfestes Grundmaterial in Form von $Al_2O_3$ aufweist, kann das erfindungsgemäße feuerfeste keramische Erzeugnis einen Anteil an $Al_2O_3$ von höchstens 99,5 Masse-% aufweisen, also beispielsweise auch einen Anteil von höchstens 99, 98, 96, 95, 92, 90, 88, 85, 80, 75 oder 60 Masse-%. Nach einer Ausführungsform liegt der Anteil an $Al_2O_3$ im Erzeugnis im Bereich von 90 bis 99,5 Masse-%.

Das erfindungsgemäße feuerfeste keramische Erzeugnis kann MAX-Phasen beispielsweise in einem Anteil von wenigstens 0,5 Masse-% aufweisen, also beispielsweise auch in einem Anteil von wenigstens 0,6 oder 0,8 oder 1,0 oder 1,2 oder 1,4 oder 1,6 oder 1,8 oder 2,0 oder wenigstens 2,5 Masse %. Ferner kann das erfindungsgemäße feuerfeste keramische Erzeugnisse MAX-Phasen in einem Anteil von höchstens 50 Masse-% aufweisen, also beispielsweise auch in einem Anteil von höchstens 35, 30, 25, 20, 15, 13, 12, 11, 10, 9, 8, 7, 6, 5 oder 4 Masse-%. -%. Nach einer Ausführungsform liegt der Anteil an MAX-Phasen im Erzeugnis im Bereich von 0,5 bis 10 Masse-%.

Es kann vorgesehen sein, dass das erfindungsgemäße feuerfeste keramische Erzeugnis neben den vorbezeichneten oxidischen und nicht-oxidischen feuerfesten Grundmaterialien sowie den MAX-Phasen weitere Komponenten in einem Anteil unter 10 Masse-% aufweist, also beispielsweise auch in einem Anteil unter 9, 8, 7, 6, 5, 4, 3, 2 oder 1 Masse-%.

Soweit das erfindungsgemäße feuerfeste keramische Erzeugnis ein feuerfestes Grundmaterial in Form von $Al_2O_3$ aufweist, kann vorgesehen sein, dass das erfindungsgemäße feuerfeste keramische Erzeugnis neben $Al_2O_3$ und MAX-Phasen weitere Komponenten in einem Anteil unter 10 Masse-% aufweist, also beispielsweise auch einen Anteil unter 9, 8, 7, 6, 5, 4, 3, 2 oder 1 Masse-%.

Das erfindungsgemäße Erzeugnis kann insbesondere wenigstens eine der folgenden Phasen aufweisen: metallisches Aluminium, metallisches Silizium, metallisches Titan, metallisches Eisen oder wenigstens einer Legierung aus den Metallen Aluminium, Silizium, Titan oder Eisen. Durch das Vorhandensein von metallischem Aluminium, Silizium, Titan oder Eisen sowie Legierungen daraus im Erzeugnis kann die Korrosionsbeständigkeit des Erzeugnisses noch weiter verbessert werden, insbesondere soweit es bei der Anwendung des Erzeugnisses zur Entstehung von Rissen oder Bruchflächen im oder am Erzeugnis kommt. Solche Risse oder Bruchflächen im oder am Erzeugnis können beispielsweise durch einen mechanischen Angriff auf das Erzeugnis, durch thermomechanische Spannungen im Erzeugnis, durch einen hochkorrosiven Angriff auf das Erzeugnis oder bei erhöhten Temperaturen entstehen. Entlang dieser entstandenen Risse oder Bruchflächen liegen dann metallisches Aluminium, Silizium, Titan oder Eisen oder Legierungen daraus, welche bisher im Inneren des Erzeugnisses vor der umgebenden Atmosphäre geschützt war, frei, womit sie nunmehr der umgebenden Atmosphäre ausgesetzt sind. Im Falle einer oxidierenden Atmosphäre werden das metallische Aluminium, Silizium, Titan oder Eisen oder Legierungen daraus oxidiert, was mit einer Volumenvergrößerung einhergeht. Hierdurch können die entstandenen Risse und Bruchflächen geschlossen werden, wodurch ein Eindringen von korrosiven Medien, beispielsweise Schlacken oder Schmelzen, in das Erzeugnis unterbunden werden kann. Aufgrund dieses Selbstheilungseffektes kann die Korrosionsbeständigkeit des Erzeugnisses weiter verbessert werden. Bevorzugt weist das Erzeugnis Anteile an metallischem Aluminium, Silizium, Titan oder Eisen oder Legierungen daraus in einer Gesamtmasse im Bereich von 0,1 Masse-% bis 1,0 Masse-% auf, also beispielsweise auch in einer Gesamtmasse von wenigstens 0,1 Masse-%, 0,2 Masse-%, 0,3 Masse-%, 0,4 Masse-% oder 0,5 Masse-% und beispielsweise auch in einer Gesamtmasse von höchstens 1,0 Masse-%, 0,9 Masse-%, 0,8 Masse-%, 0,7 oder 0,6 Masse-%. Als besonders wirksam zur Verbesserung der Korrosionsbeständigkeit hat sich dabei die Präsenz von metallischem Aluminium in reiner Form oder in Form einer Legierung mit wenigstens einem der weiteren Metalle Silizium, Titan oder Eisen erwiesen. Insoweit kann das Erzeugnis Anteile an metallischem Aluminium im Bereich von 0,1 Masse-% bis 1,0 Masse-% aufweisen, als beispielsweise auch in einer Masse von wenigstens 0,1 Masse-%, 0,2 Masse-%, 0,3 Masse-%, 0,4 Masse-% oder 0,5 Masse-% und beispielsweise auch in einer Masse von höchstens 1,0 Masse-%, 0,9 Masse-%, 0,8 Masse-%, 0,7 oder 0,6 Masse-%.

Die hierin gemachten Angaben in Masse-% sind jeweils bezogen auf die Gesamtmasse des erfindungsgemäßen feuerfesten keramischen Erzeugnisses, soweit im Einzelfall nichts anderes angegeben ist.

Gemäß einer besonders bevorzugten Ausführungsform weisen die Kristallite in Form einer MAX-Phase durchschnittlich einen Durchmesser von wenigstens 10 μm auf. Insoweit umfasst das erfindungsgemäße feuerfeste keramische Erzeugnis nicht nur einzelne Kristallite in Form einer MAX-Phase mit einem wie vorstehend ausgeführten Mindestdurchmesser, sondern vielmehr weisen die Kristallite in Form einer MAX-Phase insgesamt durchschnittlich einen Durchmesser von wenigstens 10 μm auf. Hierdurch ist eine besonders gute Korrosionsbeständigkeit des erfindungsgemäßen feuerfesten keramischen Erzeugnisses gewährleistet. Insoweit können die Kristallite in Form einer MAX-Phase durchschnittlich einen Durchmesser von wenigstens 10 μm aufweisen, also beispielsweise auch durchschnittlich einen Durchmesser von wenigstens 20 μm, 30 μm, 40 μm, 50 μm, 60 μm, 70 μm, 80 μm, 90 μm, 100 μm, 110μm, 120 μm, 130 μm, 140 μm, 150 μm, 160 μm, 170 μm, 180 μm, 190 μm, 200 μm, 210 μm, 220 μm, 230 μm, 240 μm, 250 μm, 260 μm, 270 μm, 280 μm, 290 μm oder 300 μm aufweisen. Die vorbezeichneten durchschnittlichen Durchmesser, die Kristallite in Form einer MAX-Phase des erfindungsgemäßen Erzeugnisses wenigstens aufweisen können, werden hierin auch als "durchschnittlicher Mindestdurchmesser" bezeichnet. Besonders bevorzugt umfasst das erfindungsgemäße feuerfeste keramische Erzeugnis Kristallite in Form einer MAX-Phase mit einem durchschnittlichen Durchmesser von wenigstens 100 μm und ganz besonders auch mit einem durchschnittlichen Durchmesser von wenigstens 200 μm.

Die Kristallite in Form der MAX-Phase können den durchschnittlichen Mindestdurchmesser hinsichtlich der Gesamtmasse der Kristallite aufweisen. Erfindungsgemäß hat sich jedoch herausgestellt, dass es für die Verbesserung der Korrosionsbeständigkeit des erfindungsgemäßen feuerfesten keramischen Erzeugnisses genügt, soweit die Kristallite den durchschnittlichen Mindestdurchmesser nur hinsichtlich des überwiegenden Massenanteils der Kristallite, in Bezug auf die Gesamtmasse der Kristallite in Form einer MAX-Phase im Erzeugnis, aufweisen. Insoweit ist nach einer Ausführungsform vorgesehen, dass die Kristallite in Form einer MAX-Phase den erfindungsgemäßen durchschnittlichen Mindestdurchmesser in Bezug auf wenigstens 50 Masse-% der Kristallite in Form einer MAX-Phase aufweisen, also beispielsweise auch in Bezug auf wenigstens 60, 70, 80, 90 oder 95 Masse-% der Kristallite in Form einer MAX-Phase, jeweils bezogen auf die Gesamtmasse der Kristallite in Form einer MAX-Phase im erfindungsgemäßen Erzeugnis. Besonders bevorzugt weisen die Kristallite in Form einer MAX-Phase den erfindungsgemäßen durchschnittlichen Mindestdurchmesser in Bezug auf wenigstens 90 Masse-% der Kristallite in Form einer MAX-Phase auf, bezogen auf die Gesamtmasse der Kristallite in Form einer MAX-Phase im erfindungsgemäßen Erzeugnis.

Erfindungsgemäß wurde festgestellt, dass die Korrosionsbeständigkeit eines feuerfesten keramischen Erzeugnisses mit zunehmendem durchschnittlichem Mindestdurchmesser der Kristallite, wie zuvor ausgeführt, gesteigert werden kann.

Der durchschnittliche Mindestdurchmesser der Kristallite in Form einer MAX-Phase wird nach dem Sehnenschnittverfahren gemäß dem "Intercept Procedure" nach ASTM E 112 - 96 (Reapproved)[e2] bestimmt. Zur Durchführung dieses Sehnenschnittverfahrens gemäß ASTM E 112 - 96 (Reapproved)[e2] können wiederum, wie zuvor ausgeführt, Schnittproben eines feuerfesten keramischen Erzeugnisses hergestellt und der durchschnittliche Durchmesser der Kristallite der MAX-Phasen mittels der nach dem Sehnenschnittverfahren gemessenen Durchmesser der Querschnittsflächen der Kristallite bestimmt werden.

Das Gefüge eines erfindungsgemäßen feuerfesten keramischen Erzeugnisses stellt sich bevorzugt als eine Matrix aus wenigstens einem feuerfesten Grundmaterial dar, in das die Kristallite in Form einer MAX-Phase eingebettet sind. Die MAX-Phasen können dabei in Form einzelner, insbesondere auch voneinander isolierter Bereiche vorliegen, die aus einem oder mehreren Kristalliten gebildet sind. Insoweit können sich diese Bereiche als ein polykristallines Gefüge aus mehreren Kristalliten in Form von MAX-Phasen darstellen. Diese Bereiche aus MAX-Phasen sind nunmehr eingebettet in eine Matrix aus einem feuerfesten Grundmaterial, das wie vorstehend ausgebildet sein kann. Soweit das feuerfeste Grundmaterial ganz oder im wesentlichen in Form von $Al_2O_3$ vorliegt, können die MAX-Phasen insoweit beispielsweise in eine Matrix eingebettet sein, die ganz oder im wesentlichen in Form von $Al_2O_3$ vorliegt.

Das feuerfeste keramische Erzeugnis kann in Form eines gesinterten feuerfesten keramischen Erzeugnisses vorliegen. Zur Herstellung eines solch gesinterten feuerfesten keramischen Erzeugnisses können die Rohstoffe zur Herstellung eines solchen Erzeugnisses zu einem solch feuerfesten keramischen Erzeugnis miteinander versintert werden. Zur Herstellung eines solch gesinterten feuerfesten keramischen Erzeugnisses kann auf die aus dem Stand der Technik bekannten Verfahren zur Herstellung eines gesinterten feuerfesten keramischen Erzeugnisses zurückgegriffen werden. Insofern können die Rohstoffe gemäß den aus dem Stand der Technik bekannten Verfahren aufbereitet werden, also beispielsweise in einer bestimmten Korngröße zur Verfügung gestellt werden. Anschließend können die einzelnen Rohstoffe beispielsweise miteinander vermischt und beispielsweise auch gemeinsam miteinander vermahlen werden. Anschließend können die Rohstoffe beispielsweise zu einem Formkörper geformt werden, beispielsweise durch Pressen. Um diesem ungebrannten Formkörper, einem sogenannten Grünkörper, die notwendige Stabilität zu verleihen, können die Rohstoffe vor dem Pressen beispielsweise mit einem Binder, beispielsweise einem organischen Binder, miteinander vermischt werden. Der Formkörper kann anschließend, gegebenenfalls nach einer vorherigen Trocknung, gesintert werden, beispielsweise durch Spark-Plasma-Sintern (SPS), wie beispielsweise in der oben zitierten Veröffentlichung von L. F. Liu et. al. ausgeführt.

Soweit das erfindungsgemäße feuerfeste Erzeugnis in Form eines gesinterten Erzeugnisses zur Verfügung gestellt wird, kann insbesondere vorgesehen sein, dass die Rohstoffe zur Herstellung eines solchen Erzeugnisses unter anderem auch einen Rohstoff in Form einer MAX-Phase umfassen, der insbesondere als körniges Gut zur Verfügung gestellt werden kann. Da sich die Größe der Kristallite der MAX-Phasen dieses Rohstoffes während des Sinterns nicht oder nicht wesentlich ändert, kann erfindungsgemäß insbesondere vorgesehen sein, dass der Rohstoff in Form der MAX-Phase, der zur Herstellung eines gesinterten feuerfesten keramischen Erzeugnisses zur Verfügung gestellt wird, bereits Kristallite mit einem erfindungsgemäßen Mindestdurchmesser beziehungsweise bereits Kristallite mit einem durchschnittlichen Mindestdurchmesser aufweist. Neben einem Rohstoff in Form einer MAX-Phase können zur Herstellung eines gesinterten erfindungsgemäßen feuerfesten keramischen Erzeugnisses einer oder mehrere weitere Rohstoffe auf Basis eines oder mehrerer der oben genannten, feuerfesten keramischen Grundmaterialien zur Verfügung gestellt werden. Soweit das erfindungsgemäße Erzeugnis ein feuerfestes Grundmaterial in Form von $Al_2O_3$ aufweist, können einer oder mehrere der folgenden Rohstoffe auf Basis $Al_2O_3$ zur Verfügung gestellt werden: Schmelzkorund, Sinterkorund, Tabulartonerde, Bauxit oder kalzinierte Tonerde. Besonders bevorzugt wird ein Rohstoff in Form von kalzinierter Tonerde zur Verfügung gestellt.

Nach einer besonders bevorzugten Ausführungsform ist alternativ vorgesehen, dass das erfindungsgemäße feuerfeste keramische Erzeugnis in Form einer erstarrten Schmelze vorliegt. Das erfindungsgemäße Erzeugnis ist demnach aus einer nach ihrer Abkühlung erstarrten Schmelze gebildet. Auch bei dieser Ausführungsform können die Kristallite in Form einer MAX-Phase, wie oben ausgeführt, in die aus dem wenigstens einen feuerfesten Grundmaterial gebildete Matrix eingebettet sein.

Zur Herstellung eines erfindungsgemäßen feuerfesten keramischen Erzeugnisses in Form einer solch erstarrten Schmelze können zunächst Rohstoffe gemeinsam erschmolzen und die gebildete Schmelze anschließend abgekühlt werden, bis sie erstarrt und anschließend ein erfindungsgemäßes feuerfestes keramisches Erzeugnis in Form einer erstarrten Schmelze bildet.

Als Rohstoffe zur Herstellung eines solchen Erzeugnisses in Form einer erstarrten Schmelze können dabei solche Rohstoffe vorgesehen sein, die Elemente umfassen, aus denen eine MAX-Phase ausbildbar ist. Soweit beispielsweise wenigstens eine MAX-Phase in Form von $Ti_3SiC_2$ im Erzeugnis vorliegen soll, können Rohstoffe verwendet werden, die Titan, Silizium und Kohlenstoff umfassen. Als Titan umfassender Rohstoff können beispielsweise einer oder mehrere der folgenden Rohstoffe verwendet werden: Rutil, Rutilsand oder Aluminiumtitanat; bevorzugt wird Rutilsand als Rohstoff verwendet. Als Silizium umfassender Rohstoff können beispielsweise einer oder mehrere der folgenden Rohstoffe verwendet werden: Kaolin, Schamotte, feuerfester Ton, Mullit, Quarzit, Quarzsand oder Zirkon; bevorzugt wird Kaolin als Rohstoff verwendet. Als Kohlenstoff umfassender Rohstoff können beispielsweise einer oder mehrere der folgenden Rohstoffe verwendet werden: Graphit, Anthrazit, Ruß, Petrolkoks, Silikonharz oder Phenolharz; bevorzugt wird Graphit als Rohstoff verwendet. Ferner können die Rohstoffe Elemente zur Ausbildung des feuerfesten Grundmaterials umfassen, also beispielsweise Elemente zur Ausbildung der oben ausgeführten oxidischen und/oder nicht-oxidischen feuerfesten Grundmaterialien. Sofern im Erzeugnis ein feuerfestes Grundmaterial in Form von $Al_2O_3$ vorgesehen ist, können beispielsweise einer oder mehrere der folgenden Rohstoffe auf Basis $Al_2O_3$ zur Verfügung gestellt werden: Schmelzkorund, Sinterkorund, Tabulartonerde, Bauxit oder kalzinierte Tonerde; bevorzugt wird kalzinierte Tonerde als Rohstoff verwendet. Als Rohstoffe zur Herstellung eines solchen Erzeugnisses in Form einer erstarrten Schmelze mit einem feuerfesten Grundmaterial in Form von $Al_2O_3$ können insoweit beispielsweise ein Rohstoff in Form von kalzinierter Tonerde als $Al_2O_3$ umfassende Komponente, ein Rohstoff in Form von Graphit als Kohlenstoff umfassende Komponente, ein Rohstoff in Form von Kaolin als Silizium umfassende Komponente sowie ein Rohstoff in Form von Rutilsand als Titan umfassende Komponente zur Verfügung gestellt werden. Eine Mischung dieser Rohstoffe kann anschließend erschmolzen werden, beispielsweise in einem elektrischen Lichtbogenofen, und die Schmelze anschließend abgekühlt werden, bis sie eine erstarrte Schmelze bildet. Die erstarrte Schmelze umfasst anschließend Kristallite in Form einer MAX-Phase in Form von $Ti_3SiC_2$ sowie ein diese MAX-Phase umgebendes feuerfestes Grundmaterial in Form von $Al_2O_3$, in die die MAX-Phase eingebettet ist.

Erfindungsgemäß wurde festgestellt, dass die Bedingungen während der Erstarrung der Schmelze bis zu ihrer vollständigen Erstarrung einen entscheidenden Einfluss auf die Ausbildung der Größe der Kristallite der MAX-Phase ausüben. Insoweit wurde erfindungsgemäß festgestellt, dass in der Schmelze vorhandene Kristallkeime aus einer MAX-Phase insbesondere dann zu Kristalliten in Form einer MAX-Phase mit einem Durchmesser von wenigstens 10 μm wachsen können, wenn diese Kristallkeime für ein ausreichendes Zeitintervall in einer flüssigen Umgebung vorliegen beziehungsweise von der Schmelze umgeben sind, weil nur in diesem Fall die für das Kristallwachstum notwendigen Diffusionsvorgänge mit ausreichender Geschwindigkeit stattfinden. Sobald das die Kristallkeime umgebende Material erstarrt ist, sinkt das Kristallwachstum rapide ab. Erfindungsgemäß wurde festgestellt, dass die Schmelze insbesondere derart abgekühlt werden muss, um in der erstarrten Schmelze Kristallite in Form einer MAX-Phase mit einem Durchmesser von wenigstens 10 μm zu erhalten, dass die Schmelze in den Bereichen, in sich Kristallkeime aus einer MAX-Phase bilden, für einen Zeitraum von wenigstens 30 Minuten im schmelzflüssigen Zustand gehalten werden muss, um den Kristallkeimen dort geeignete Bedingungen für ein Kristallwachstum zu ermöglichen. Dieser Zeitraum kann, zur Verbesserung des Kristallwachstums, insbesondere auch wenigstens 35, 40, 50, 60, 90 oder 120 Minuten betragen.

Gegenstand der Erfindung ist auch ein Versatz, welcher einen oder mehrere der vorgenannten Rohstoffe zur Herstellung des erfindungsgemäßen feuerfesten keramischen Erzeugnisses umfasst.

Soweit der Versatz zur Herstellung eines gesinterten feuerfesten keramischen Erzeugnisses dient, umfasst der Versatz einen oder mehrere Rohstoffe auf Basis wenigstens eines der oben beschriebenen feuerfesten Grundmaterialien sowie einen oder mehrere Rohstoffe auf Basis einer MAX-Phase mit Kristalliten in Form der MAX-Phase mit einem erfindungsgemäßen Mindestdurchmesser oder mit einem erfindungsgemäßen durchschnittlichen Mindestdurchmesser.

Soweit der Versatz zur Herstellung eines feuerfesten keramischen Erzeugnisses in Form einer erstarrten Schmelze dient, umfasst der Versatz einen oder mehrere Rohstoffe, die Elemente umfassen, aus denen wenigstens eines der oben beschriebenen feuerfesten Grundmaterialien sowie eine MAX-Phase ausbildbar ist.

Gegenstand der Erfindung ist auch ein Verfahren zur Herstellung des erfindungsgemäßen feuerfesten keramischen Erzeugnisses in Form einer erstarrten Schmelze, welches die folgenden Schritte umfasst:

- Zur Verfügungstellung eines erfindungsgemäßen Versatzes zur Herstellung eines feuerfesten keramischen Erzeugnisses in Form einer erstarrten Schmelze;
- Erschmelzen des Versatzes;
- Abkühlen der Schmelze derart, dass die Schmelze ein erfindungsgemäßes feuerfestes keramisches Erzeugnis ausbildet.

Insbesondere kann die Schmelze wie oben beschriebenen abgekühlt werden. Insbesondere kann die Schmelze in den Bereichen, in denen sich Kristallkeime aus einer MAX-Phase bilden, für einen solchen Zeitraum im schmelzflüssigen Zustand gehalten werden, dass die Kristallkeime auf einen Durchmesser von wenigstens 10 μm wachsen.

Das erfindungsgemäße feuerfeste keramische Erzeugnis kann beispielsweise als keramischer Formkörper oder beispielsweise als Bestandteil eines keramischen Formkörpers zur Verfügung gestellt werden.

Alternativ kann das erfindungsgemäße feuerfeste keramische Erzeugnis beispielsweise auch als Rohstoff zur Herstellung eines Produktes in Form eines feuerfesten keramischen Erzeugnisses zur Verfügung gestellt werden. Insoweit kann das erfindungsgemäße feuerfeste keramische Erzeugnis als Rohstoff beziehungsweise als Rohstoffbestandteil eines solchen Produktes vorliegen.

Gegenstand der Erfindung ist insoweit auch ein Produkt, welches das erfindungsgemäße feuerfeste keramische Erzeugnis umfasst.

Weitere Merkmale der Erfindung ergeben sich aus den Ansprüchen, dem Ausführungsbeispiel, den Figuren sowie der zugehörigen Figurenbeschreibung.

Sämtliche Merkmale der Erfindung können, einzeln oder in Kombination, beliebig miteinander kombiniert sein.

Ein Ausführungsbeispiel der Erfindung wird nachfolgend näher erläutert.

Gemäß dem Ausführungsbeispiel wurde ein erfindungsgemäßes feuerfestes keramisches Erzeugnis in Form einer erstarrten Schmelze hergestellt.

Zur Herstellung eines solchen Erzeugnisses wurde zunächst ein Versatz zur Verfügung gestellt, der eine Aluminium umfassende Komponente in Form von calcinierter Tonerde, eine Kohlenstoff umfassende Komponente in Form von natürlichem Graphit, eine Silizium umfassende Komponente in Form von Kaolin sowie eine Titan umfassende Komponente in Form von natürlichem Rutilsand aufwies. Der Versatz wies eine Gesamtmasse von etwa 400 kg auf.

Die calcinierte Tonerde wies einen Anteil an $Al_2O_3$ von über 99 Masse-% und einen Anteil an $Na_2O$ von unter 0,4 Masse-% auf, jeweils bezogen auf die Gesamtmasse der calcinierten Tonerde. Die calcinierte Tonerde wies eine Korngröße d90 unter 100 μm auf. Der Anteil der calcinierten Tonerde an der Gesamtmasse des Versatzes lag bei 72 Masse-%.

Der natürliche Graphit wies einen Anteil an Kohlenstoff von über 94,5 Masse-% und einen Anteil an Tonmineralien unter 5 Masse-% auf, jeweils bezogen auf die Gesamtmasse des Graphits. Der Graphit lag in einer Korngröße d90 unter 500 μm vor. Der Anteil des Graphits an der Gesamtmasse des Versatzes lag bei 8 Masse-%.

Das Kaolin wies einen Anteil an Kaolinit und anderen Tonmineralien von über 97 Masse-% und einen Anteil an $Fe_2O_3$, $Na_2O$ und $K_2O$ unter 1,6 Masse-% auf, jeweils bezogen auf die Gesamtmasse des Kaolins. Kaolin lag in einer Korngröße d90 unter 20 $\mu$m vor. Der Anteil des Kaolins an der Gesamtmasse des Versatzes lag bei 15 Masse-%.

Der verwendete $TiO_2$-Träger wies einen Anteil an $TiO_2$ von über 98 Masse-% vor, bezogen auf die Gesamtmasse des $TiO_2$-Trägers. Die Korngröße d90 des $TiO_2$-Trägers lag unter 150 $\mu$m. Der Anteil des $TiO_2$-Trägers an der Gesamtmasse des Versatzes lag bei 5 Masse-%.

Die Anteile an Aluminium, Kohlenstoff, Silizium und Titan im Versatz lagen in den folgenden Bereichen:

| | |
|---|---|
| Aluminium, berechnet als $Al_2O_3$: | 78 Masse-%; |
| Kohlenstoff: | 7,6 Masse-%; |
| Silizium, berechnet als $SiO_2$: | 8,61 Masse-%; |
| Titan, berechnet als $TiO_2$: | 5 Masse-%; |
| $Fe_2O_3$: | 0,17 Masse-%; |
| $Na_2O + K_2O$: | 0,43 Masse-%; |
| Rest: | 0,19 Masse-%. |

Der Versatz wurde gemischt.

Der entsprechend aufbereitete Versatz wurde anschließend für etwa 6 Stunden in reduzierender Atmosphäre im Elektrolichtbogenofen durch den Lichtbogen beaufschlagt, wodurch der Versatz auf Temperaturen über etwa 2.000°C erwärmt wurde und sich aus dem Versatz eine Schmelze bildete.

Die Schmelze wurde anschließend langsam abgekühlt, wodurch sich MAX-Phasen mit Kristalliten mit einem Durchmesser von über 10 $\mu$m ausbildeten.

Konkret wurde die Schmelze jeweils in den Bereichen, in denen sich Kristallkeime aus einer MAX-Phase bildeten, für einen Zeitraum von etwa 40 Minuten im schmelzflüssigen Zustand gehalten, um den Kristallkeimen dort geeignete Bedingungen für ein Kristallwachstum zu ermöglichen. Auf Grund dieser Erstarrungsbedingungen bildeten die MAX-Phasen Kristallite aus, welche auch Durchmesser im Bereich von etwa 10 bis 300 $\mu$m aufwiesen.

Das Gefüge der erstarrten Schmelze wies als Hauptphase Korund ($Al_2O_3$) auf, welche eine Matrix bildete, in die MAX-Phasen in Form von $Ti_3SiC_2$ eingebettet waren. Der Anteil an Korund an der erstarrten Schmelze betrug etwa 93 Masse-% und der Anteil der MAX-Phasen etwa 2 Masse-%, jeweils bezogen auf die Gesamtmasse des Erzeugnisses. Neben den vorbezeichneten Phasen in Form von Korund und MAX-Phase wies das Erzeugnis weitere Phasen insbesondere in Form Titancarbid, Siliziumcarbid, nitridischen und carbidischen Phasen sowie in Form von metallischem Aluminium, Silizium, Titan und Eisen auf. Zahlreiche der Kristallite in Form der MAX-Phasen wiesen Einschlüsse aus Titancarbid in Form von TiC und $Ti_3C_2$ auf.

Zur Bestimmung des Durchmessers der Kristallite der MAX-Phasen des Erzeugnisses wurden Schliffproben des gebildeten Erzeugnisses hergestellt und im Auflicht unter gekreuzten Polarisatoren Schliffbilder der Schliffproben angefertigt. Unter den gekreuzten Polarisatoren waren die Korngrenzen beziehungsweise Kristallgrenzen der einzelnen Kristallite der MAX-Phasen gut erkennbar, da die einzelnen Kristallite sich aufgrund der unterschiedlichen Orientierung ihrer Kristallstruktur in unterschiedlichen Farbtönen beziehungsweise Interferenzfarben darstellten.

Anhand der Schliffbilder wurde festgestellt, dass der Großteil der Kristallite der MAX-Phasen einen Durchmesser von über 10 $\mu$m aufwies. Hierzu wurde, wie oben ausgeführt, anhand der in den Schliffbildern sichtbaren Schnittflächen der Kristallite überprüft, ob das Erzeugnis Kristallite umfasste, deren Querschnittsfläche an irgendeiner Stelle einen Durchmesser von wenigstens 10 $\mu$m aufwies. Dies war bei einem Großteil der Kristallite der MAX-Phasen, die gemäß dem Ausführungsbeispiel hergestellt worden waren, der Fall. Insbesondere umfasste das Erzeugnis auch Kristallite in Form einer MAX-Phase mit einem Durchmesser von wenigstens 400 oder sogar von wenigstens 500 $\mu$m, wie unten in der Figurenbeschreibung näher erläutert.

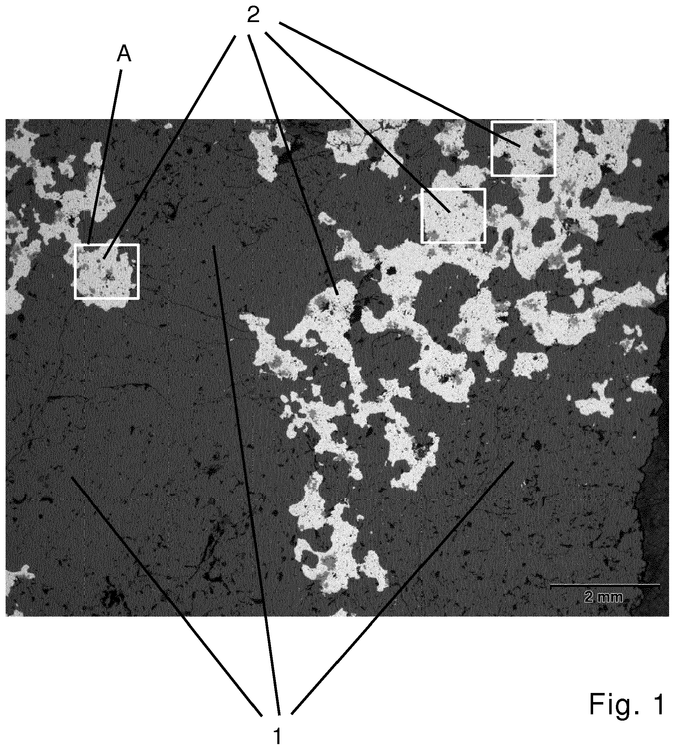

Zur Feststellung des durchschnittlichen Durchmessers der Kristallite der MAX-Phasen wurde das Sehnenschnittverfahren gemäß dem "Intercept Procedure" nach ASTM E 112 - 96 (Reapproved)[e2] angewandt (unter Berücksichtigung eines Faktors von 1,5 für kugelförmige Kristalle gemäß A2.3.1). Dieses Verfahren wurde ebenfalls auf Grundlage der erstellten Schliffbilder durchgeführt. Danach wiesen die Kristallite der MAX-Phasen einen Durchmesser von durchschnittlich etwa 352 $\mu$m auf, und zwar in Bezug auf über 90 Masse-% der Kristallite in Form der MAX-Phase. Wie die Figuren 1 bis 4 zeigen, existierte nur ein sehr geringer Massenanteil an sehr kleinen Kristalliten in Form der MAX-Phase, die bei der Bestimmung des durchschnittlichen Durchmessers der Kristallite mittels des Sehnenschnittverfahren gemäß ASTM E 112 - 96 (Reapproved)[e2] nicht berücksichtigt wurden.

In den nachfolgenden Figuren zeigt

Figur 1    ein mikroskopisches Schliffbild im Auflicht auf eine Schliffprobe des gemäß dem Ausführungsbeispiel hergestellten feuerfesten keramischen Erzeugnis,

Figur 2    den Ausschnitt A gemäß Figur 1 im Auflicht,

Figur 3    den Ausschnitt A gemäß Figur 1 im Auflicht unter gekreuzten Polarisatoren und

Figur 4    den Ausschnitt A gemäß Figur 1 im Auflicht unter gekreuzten Polarisatoren und eingezeichneten Durchmessern der Kristallite in Form von MAX-Phasen.

Figur 1 zeigt einen Ausschnitt eines Schliffbildes im Auflicht einer Schliffprobe eines Anschliffes des feuerfesten keramischen Erzeugnisses, welches gemäß dem Ausführungsbeispiel erstellt ist. Der schwarze Balken unten rechts in Figur 1 entspricht einer Länge von 2 mm, so dass der gesamte Ausschnitt einer Fläche von etwa 12,3 x 9,2 mm entspricht. Zu erkennen ist in Figur 1 eine dunkelgraue Matrix 1 aus Korund, in die die weiteren, in Figur 1 helleren MAX-Phasen, die mit dem Bezugszeichen 2 gekennzeichnet sind, als inselartige Bereiche eingebettet sind.

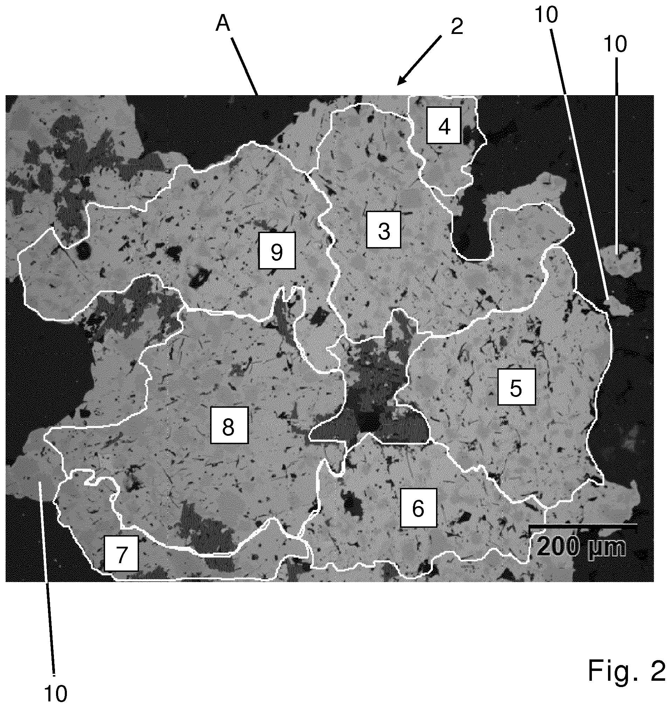

Ein Ausschnitt A in Figur 1, in dem ein solcher Bereich in Form einer MAX-Phase 2 vorhanden ist, ist in Figur 2 vergrößert dargestellt. Der schwarze Balken unten rechts in Figur 2 entspricht einer Länge von 200 $\mu$m, so dass der Ausschnitt gemäß Figur 2 einer Fläche von etwa 1,2 x 0,9 mm entspricht.

Die MAX-Phase 2 gemäß Figur 2 weist zahlreiche Kristallite 3, 4, 5, 6, 7, 8, 9 in Form von MAX-Phasen auf, deren Kristallitgrenzen beziehungsweise Korngrenzen in Figur 2 durch weiße Linien kenntlich gemacht sind. Entsprechend große Kristallite 3, 4, 5, 6, 7, 8, 9 wurden auch bei der Bestimmung des durchschnittlichen Durchmessers der Kristallite des Erzeugnisses mittels des Sehnenschnittverfahrens gemäß ASTM E 112 - 96 (Reapproved)$^{e2}$ berücksichtigt. Kleinere Kristallite, beispielsweise solche, die in Figur 2 mit dem Bezugszeichen 10 gekennzeichnet sind und die - bezogen auf die Gesamtmasse der Kristallite in Form der MAX-Phase - deutlich unter 10 Masse-% liegen, wurden dabei nicht berücksichtigt.

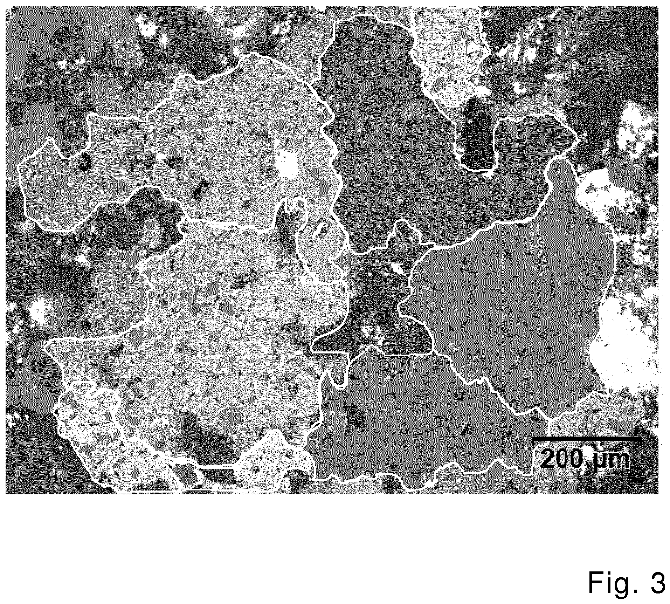

Figur 3 zeigt den Ausschnitt gemäß Figur 2 unter gekreuzten Polarisatoren, wodurch die einzelnen Kristallite 3, 4, 5, 6, 7, 8, 9 in unterschiedlichen Grautönen erscheinen.

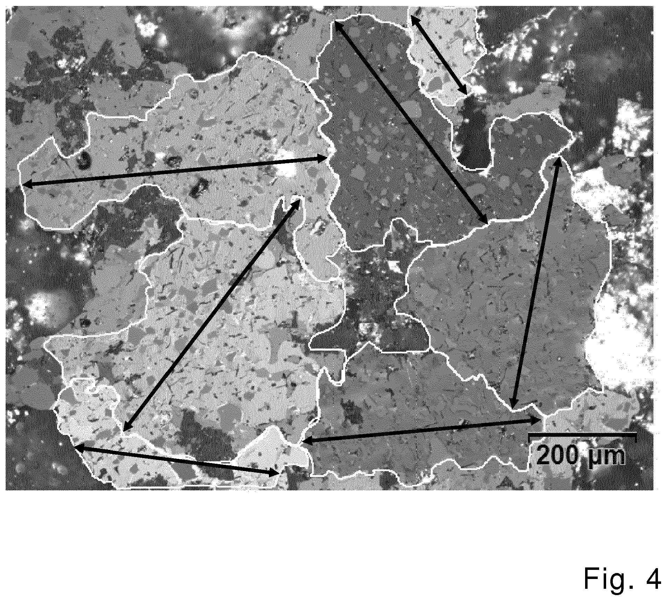

Figur 4 zeigt den Ausschnitt gemäß Figur 2, wobei in den Kristalliten 3, 4, 5, 6, 7, 8, 9 jeweils ein durch einen Doppelpfeil kenntlich gemachter Durchmesser an einer beliebigen Querschnittsfläche der Kristallite 3, 4, 5, 6, 7, 8, 9 gemessen wurde. Die Durchmesser weisen Größen im Bereich von etwa 440 bis 560 $\mu$m auf und damit einen Durchmesser von jeweils wenigstens 10 $\mu$m.

Das gemäß dem Ausführungsbeispiel hergestellte feuerfeste keramische Erzeugnis weist eine hervorragende Korrosionsbeständigkeit auf, insbesondere gegenüber metallischen Schlacken sowie Metallschmelzen.

Das gemäß dem Ausführungsbeispiel hergestellte feuerfeste keramische Erzeugnis lässt sich daher beispielsweise auch hervorragend als Rohstoff zur Herstellung von feuerfesten keramischen Produkten einsetzen, um die Korrosionsbeständigkeit eines unter Verwendung dieses Erzeugnisses hergestellten Produktes zu verbessern.

**Patentansprüche**

1. Feuerfestes keramisches Erzeugnis mit folgenden Merkmalen:

   1.1 das Erzeugnis umfasst Kristallite in Form einer MAX-Phase;
   1.2 die Kristallite in Form der MAX-Phase umfassen Kristallite mit einem Durchmesser von wenigstens 10 $\mu$m.

2. Erzeugnis nach Anspruch 1 auf Basis wenigstens eines feuerfesten Grundmaterials.

3. Erzeugnis nach wenigstens einem der vorhergehenden Ansprüche auf Basis eines feuerfesten Grundmaterials in Form von Aluminiumoxid.

4. Erzeugnis nach wenigstens einem der vorhergehenden Ansprüche mit einer MAX-Phase in Form von $Ti_3SiC_2$.

5. Erzeugnis nach wenigstens einem der vorhergehenden Ansprüche, bei dem die Kristallite in Form einer MAX-Phase in eine aus wenigstens einem feuerfesten Grundmaterial gebildete Matrix eingebettet sind.

6. Erzeugnis nach wenigstens einem der vorhergehenden Ansprüche in Form einer erstarrten Schmelze.

7. Erzeugnis nach wenigstens einem der vorhergehenden Ansprüche, bei dem die Kristallite in Form einer MAX-Phase Kristallite mit einem Durchmesser von wenigstens 100 $\mu$m umfassen.

8. Erzeugnis nach wenigstens einem der vorhergehenden Ansprüche, bei dem wenigstens 90 Masse-% der Kristallite in Form einer MAX-Phase durchschnittlich einen Durchmesser von wenigstens 10 $\mu$m aufweisen.

9. Produkt, welches ein Erzeugnis nach wenigstens einem der vorhergehenden Ansprüche umfasst.

**Claims**

1. Refractory ceramic product having the following features:

   1.1. the product comprises crystallites in the form of a MAX phase;
   1.2 the crystallites in the form of a MAX phase comprise crystallites with a diameter of at least 10 $\mu$m.

2. Product according to claim 1 based on at least one refractory base material.

**3.** Product according to at least one of the preceding claims based on a refractory base material in the form of aluminium oxide.

**4.** Product according to at least one of the preceding claims having a MAX phase in the form of $Ti_3SiC_2$.

**5.** Product according to at least one of the preceding claims, in which the crystallites in the form of a MAX phase are embedded in a matrix formed from at least one refractory base material.

**6.** Product according to at least one of the preceding claims in the form of a solidified melt.

**7.** Product according to at least one of the preceding claims, in which the crystallites in the form of a MAX phase comprise crystallites with a diameter of at least 100 $\mu$m.

**8.** Product according to at least one of the preceding claims, in which at least 90% by mass of the crystallites in the form of a MAX phase have an average diameter of at least 10 $\mu$m.

**9.** A product comprising a product according to at least one of the preceding claims.

**Revendications**

**1.** Produit céramique réfractaire avec les caractéristiques suivantes :

1.1 le produit comprend des cristallites sous forme d'une phase MAX ;
1.2 les cristallites sous forme de la phase MAX comprennent des cristallites avec un diamètre d'au moins 10 $\mu$m.

**2.** Produit, selon la revendication 1, sur la base d'au moins un matériau de base réfractaire.

**3.** Produit, selon l'une au moins des revendications précédentes, sur la base d'un matériau de base réfractaire sous forme d'oxyde d'aluminium.

**4.** Produit selon l'une au moins des revendications précédentes, avec une phase MAX sous forme de $Ti_3SiC_2$.

**5.** Produit selon l'une au moins des revendications précédentes, dans lequel les cristallites sous forme d'une phase MAX sont noyées dans une matrice formée par au moins un matériau de base réfractaire.

**6.** Produit, selon l'une au moins des revendications précédentes, sous forme d'une masse fondue solidifiée.

**7.** Produit selon l'une au moins des revendications précédentes, dans lequel les cristallites sous forme d'une phase MAX comprennent des cristallites avec un diamètre d'au moins 100 $\mu$m.

**8.** Produit selon l'une au moins des revendications précédentes, dans lequel au moins 90 % en masse des cristallites sous forme d'une phase MAX présentent en moyenne un diamètre d'au moins 10 $\mu$m.

**9.** Produit, lequel comprend un produit selon l'une au moins des revendications précédentes.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MILADIN RADOVIC ; MICHEL W. BARSOUM.** Metalle. American Ceramic Society Bulletin, April 2013, vol. 92
- **L. F. LIU.** Microstructure and properties of Al2O3-TiC-Ti3SiC composites fabricated by spark plasma sintering. *Applied Ceramics,* 2010, vol. 109 (7), 394-398
- **Y. M. LUO et al.** Fabrication of Al2O3-Ti3SiC2 and mechanical properties invaluation. *Materials Letters,* 2003, vol. 57, 2509-2514
- **L. YONG MING et al.** Preparation and characterization of Al2O3-Ti3SiC2 composites and its functionally graded materials. *Material Research Bulletin,* 2003, vol. 38 (1), 696-78
- **Y.-L. CHIN et al.** Contribution of plastic deformation of Ti3SiC2 to the crack deflection in the Al2O3/Ti3SiC2 composites. *Materials, Science & Engineering A 528,* 2011, vol. 128 (7), 3270-3274